# EUROPÄISCHE PATENTANMELDUNG

(11) **EP 4 497 537 A1**
(43) Veröffentlichungstag der Anmeldung: **29.01.2025**
(21) Anmeldenummer: 24184602.1
(22) Anmeldetag: 26.06.2024
(51) Int. Cl.: B23Q 11/08, B67C 3/22

(54) **ANLAGE ZUM HERSTELLEN UND/ODER BEHANDELN VON OBJEKTEN UND SYSTEM ZUM ABDICHTEN EINES MASCHINENGEHÄUSES**

(30) Priorität: 25.07.2023 DE 102023119636
(71) Anmelder: KHS GmbH, 44143 Dortmund (DE)
(72) Erfinder: Gerhards, Martin, 44143 Dortmund (DE)

(57) **Zusammenfassung**

Die Erfindung betrifft eine Anlage (30) zum Herstellen und/oder Behandeln von Objekten, umfassend mindestens eine Maschine (12, 14, 16) zum Herstellen und/oder Behandeln von Objekten, die auf einem Hallenboden (26) angeordnet ist, mindestens ein Maschinengehäuse (22), das zumindest oberhalb und seitlich der Maschine (12, 14, 16) angeordnet ist, und mindestens eine Dichtvorrichtung (32), dadurch gekennzeichnet, dass die Dichtvorrichtung (32) zum gasdichten Abdichten des Maschinengehäuses (22) an zumindest einem Wandabschnitt (23) des Maschinengehäuses (22) und mindestens einem Hallenbodenbereich (25) eines Hallenbodens (26) angeordnet ist. Mit der Erfindung wird eine Anlage bereitgestellt, bei dem ein Reinraumbereich kostengünstig und einfach montierbar hergestellt werden kann.

## Beschreibung

Die Erfindung betrifft eine Anlage zum Herstellen und/oder Behandeln von Objekten und ein System zum Abdichten eines Maschinengehäuses.

Die Herstellung von Objekten kann mittels Maschinen durchgeführt werden, die regelmäßig innerhalb einer Maschinenhalle angeordnet sind. Wenn die Objekte hohe hygienische Eigenschaften aufweisen müssen, können Sie in sterilen Umgebungen hergestellt werden. Dazu können die Maschinen in Reinraumbereiche eingeteilt werden, in denen üblicherweise ein zur Umgebung erhöhter Luftdruck hergestellt wird, um eine Kontamination mit Hallenluft zu vermeiden. Die Gehäuse der Maschinen werden daher an allen Schnittstellen zwischen dem Reinraumbereich und der Umgebung abgedichtet.

Aus JP 06017525 A ist dazu bekannt, Plattformen auf Stützen bereitzustellen, die über einem Boden schwebend angeordnet werden. Die Bodenplatten weisen an ihren Rändern Dichtmaterialien auf, die gegen eine Wand der Maschinenhalle gedrückt werden, um eine Abdichtung eines Reinraums zu bewirken. Die Montage der Bodenplatten ist jedoch aufwendig und kostenintensiv.

Aufgabe der Erfindung ist es daher, eine Anlage und ein System bereitzustellen, bei dem ein Reinraumbereich kostengünstig und einfach montierbar hergestellt werden kann.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Bei einer Anlage zum Herstellen und/oder Behandeln von Objekten, insbesondere Behältern, umfassend mindestens eine Maschine zum Herstellen und/oder Behandeln von Objekten, die auf einem Hallenboden angeordnet ist, mindestens ein Maschinengehäuse, das zumindest oberhalb und seitlich der Maschine angeordnet ist, und mindestens eine Dichtvorrichtung, ist erfindungsgemäß vorgesehen, dass die Dichtvorrichtung zum gasdichten Abdichten des Maschinengehäuses an zumindest einem Wandabschnitt des Maschinengehäuses und mindestens einem Hallenbodenbereich des Hallenbodens angeordnet ist. Die Objekte sind besonders bevorzugt als Vorformlinge bzw. als aus Vorformlingen geformte Behälter für Getränke oder dergleichen ausgebildet.

Mit der Erfindung wird damit eine Abdichtung zwischen dem Maschinengehäuse und dem Hallenboden bereitgestellt, auf dem die Maschine angeordnet ist. Das Maschinengehäuse umschließt die Maschine dabei zumindest oben und seitlich. Die Wandabschnitte des Maschinengehäuses liegen dabei auf dem Hallenboden auf. Zwischen dem Maschinengehäuse und dem Hallenboden ist eine Dichtvorrichtung angeordnet, die den Übergang zwischen den Wandabschnitten des Maschinengehäuses und dem darunterliegenden Hallenbodenbereich bildet. Es ist daher nicht notwendig, zunächst eine Plattform aus schwebend angeordneten Bodenplatten für ein Reinraum auf dem Hallenboden aufzubauen, auf der die Maschine dann angeordnet wird. Die Abdichtung erfolgt zwischen den Maschinengehäuse unmittelbar mit dem Hallenbodenbereich, der unter dem Maschinengehäuse angeordnet ist und das Maschinengehäuse trägt. Die Dichtvorrichtung kann dabei auch als Lager für das Maschinengehäuse auf dem Hallenbodenbereich fungieren. Dies vereinfacht die Montage der Anlage und reduziert damit die Kosten.

Gemäß einem Beispiel kann die mindestens eine Dichtvorrichtung mindestens ein, vorzugsweise elastisches, Dichtelement aufweisen, das sich zwischen dem Wandabschnitt und dem Hallenbodenbereich erstreckt.

Das Dichtelement kann damit die Dichtwirkung bereitstellen. Weiter kann sich das Dichtelement sowohl von dem Wandabschnitt zu dem Hallenbodenbereich als auch in einer Umfangsrichtung des Maschinengehäuses um die Maschine herum erstrecken. Ein elastisches Dichtelement kann als Elastomerkörper ausgebildet sein.

Gemäß einem weiteren Beispiel kann die Dichtvorrichtung fest mit dem Wandabschnitt verbunden sein.

Die Dichtvorrichtung ist damit Teil des Wandabschnitts und wird bei dem Aufstellen des Wandabschnitts auf den Hallenbodenbereich gleichzeitig mit dem Wandabschnitt montiert.

Weiter kann die Dichtvorrichtung zum Beispiel mindestens eine Dichtungsfläche aufweist, die am Hallenbodenbereich angeordnet ist und vorzugsweise am Hallenbodenbereich befestigt ist.

Die Dichtungsfläche kann dabei die Dichtwirkung bereitstellen und beispielsweise mit dem oben beschriebenen Dichtelement zusammenwirken.

Denkbar ist beispielsweise weiter, dass der Wandabschnitt einen Vorsprung aufweisen kann, der von dem Wandabschnitt abragt und mit der Dichtvorrichtung verbunden ist, wobei der Vorsprung vorzugsweise zum Hallenbodenbereich orientiert ist.

Mit dem Vorsprung kann ein dedizierter Bereich am Wandabschnitt bereitgestellt werden, an dem die Dichtvorrichtung befestigt werden kann. Weiter kann mit dem Vorsprung auch eine Verbindung mit einer Dichtvorrichtung bereitgestellt werden, die an dem Hallenboden befestigt ist. Die Dichtvorrichtung kann damit als separates Bauteil hergestellt werden und bei der Montage des Maschinengehäuses mit dem Wandabschnitt verbunden und an dem Hallenbodenbereich angeordnet werden. Der Vorsprung kann an einer zur Seite weisenden Fläche des Wandabschnitts und/oder an einer zum Hallenboden weisenden Fläche des Wandabschnitts befestigt sein.

Weiter betrifft die Erfindung ein System zum Abdichten eines Maschinengehäuses, umfassend mindestens einen Hallenbodenbereich eines Hallenbodens einer Maschinenhalle und mindestens eine Anlage nach der vorangegangenen Beschreibung, wobei die mindestens eine Dichtvorrichtung an dem mindestens einen Hallenbodenbereich angeordnet ist.

Vorteile und Wirkungen sowie Weiterbildungen des Systems ergeben sich aus den Vorteilen und Wirkungen sowie Weiterbildungen der oben beschriebenen Anlage. Zur Vermeidung von Wiederholungen wird daher in dieser Hinsicht auf die vorangegangene Beschreibung verwiesen.

Gemäß einem Beispiel kann der mindestens eine Hallenbodenbereich mindestens einen Sockel aufweist, an dem die Dichtvorrichtung angeordnet sein kann.

Mit dem Sockel kann eine optimale Oberfläche für die Dichtvorrichtung bereitgestellt werden. Hallenböden weisen in der Regel Neigungen auf, um Flüssigkeiten in eine vordefinierte Richtung abfließen zu lassen. Mit dem Sockel kann ein ebener und waagrechter Boden bereitgestellt werden, auf dem die Maschine und das Maschinengehäuse angeordnet werden können. Der Sockel kann als Sockelplatte für die gesamte Maschine oder als Streifen, der die Kontur der Auflagefläche der Wandabschnitte des Maschinengehäuses aufweist, bereitgestellt werden.

Weiter kann die Dichtvorrichtung beispielsweise in einem Randbereich des Sockels oder außermittig zum Sockel von dem Randbereich beabstandet angeordnet sein.

Der Sockel kann damit die Kontur des Maschinengehäuses auf dem Hallenboden abbilden oder auch über diese Kontur hinausreichen, um beispielsweise Wartungszugänge zu erleichtern bzw. zu ermöglichen. Mit der Kontur kann dabei beispielsweise der Rand der Projektion des Maschinengehäuses auf den Hallenboden gemeint sein.

Gemäß einem weiteren Beispiel kann der Hallenbodenbereich zumindest an einem Kontaktbereich mit der Dichtvorrichtung fugenfrei, eben und/oder horizontal ausgebildet sein.

Durch die fugenfreie, ebene und/oder horizontale Ausbildung des Kontaktbereichs des Hallenbodenbereichs mit der Dichtvorrichtung kann die Dichtwirkung verbessert und die Montage des Maschinengehäuses mit der Dichtvorrichtung auf dem Hallenboden erleichtert werden.

Weiter ist denkbar, dass das Maschinengehäuse auf dem Hallenboden eine geschlossene Kontur bilden kann, wobei sich der mindestens eine Hallenbodenbereich zumindest entlang der Kontur erstreckt.

Die Dichtvorrichtung kann sich damit ebenfalls geschlossen um die gesamte Maschine erstrecken und damit das Maschinengehäuse am Hallenbodenbereich in allen Richtungen abdichten.

Im Folgenden wird die Erfindung anhand einer beispielhaften Ausführungsform mittels der beigefügten Zeichnung beschrieben. Es zeigen:
- Figur 1 a-c: eine schematische Darstellung eines Systems zum Abdichten eines Maschinengehäuses, und
- Figur 2 a-e: eine schematische Darstellung der Dichtvorrichtung.

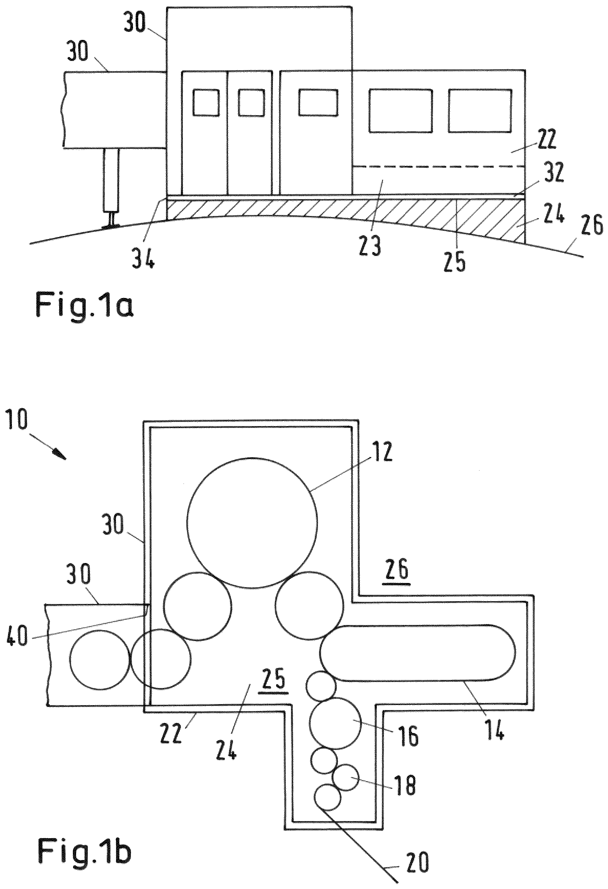

Das System zum Abdichten eines Maschinengehäuses wird gemäß Figur 1a im Folgenden in seiner Gesamtheit mit dem Bezugszeichen 10 bezeichnet.

Das System 10 umfasst eine Anlage 30 zum Herstellen und/oder Behandeln von Objekten und einen Hallenbodenbereich 25 eines Hallenbodens 26. Der Hallenboden 26 kann ein Hallenboden einer Maschinenhalle sein, in der die Anlage 30 angeordnet ist.

Der Hallenboden 26 kann optional einen Sockel 24 aufweisen, der eine fugenfreie, ebene und/oder horizontale Dichtfläche 34 bereitstellen kann. Auf dem Sockel 24 können gemäß Figur 1b Maschinen einer Anlage 30 angeordnet sein.

Alternativ kann eine fugenfreie, ebene und/oder horizontale Oberfläche unmittelbar im Hallenboden 26 im Hallenbodenbereich 25 bereitgestellt werden.

Dabei kann die Anlage 30 gemäß Figur 1b mindestens eine Maschine 12, 14, 16 aufweisen, die zum Herstellen und/oder Behandeln von Objekten ausgebildet ist. Die

Maschine kann zum Beispiel eine Umformungsmaschine 12 für Vorformlinge aus thermoplastischem Material sein, aus denen Behälter gereckt werden, eine Heizvorrichtung 14, mit der Vorformlinge aus thermoplastischen Material für eine Umformung thermisch konditioniert werden können, oder eine Sterilisationsvorrichtung 16, in der Vorformlinge und/oder Behälter sterilisiert werden können.

Die Objekte, insbesondere die Vorformlinge bzw. Behälter, können beispielsweise über Transportvorrichtungen 18 zwischen verschiedenen Maschinen 12, 14, 16 transportiert werden.

Ein Maschinengehäuse 22 kann einen Reinraumbereich abgrenzen, in dem die Maschinen 12, 14, 16 angeordnet sein können. Eine Zuführeinrichtung 20 kann zum Beispiel Vorformlinge durch das Maschinengehäuse 22 in den Reinraumbereich zu den Maschinen 12, 14, 16 durchleiten.

Weiter kann mindestens ein Durchgang 40 in dem Maschinengehäuse 22 vorhanden sein, durch den Objekte aus dem Reinraumbereich, der von dem Maschinengehäuse 22 umschlossen wird, heraus transportiert werden können.

Eine Dichtvorrichtung 32 kann einen Wandabschnitt 23 des Maschinengehäuses 22 gegenüber dem Sockel 24 bzw. dem Hallenbodenbereich 25 abdichten.

Die Dichtvorrichtung 32 verbindet das Maschinengehäuse 22 mit dem Hallenbodenbereich 25. Weiter kann die Dichtvorrichtung 32 eine gasdichte Abdichtung des Reinraumbereichs innerhalb des Maschinengehäuses 22 bewirken.

Der Sockel 24 weist in diesem Beispiel die gleiche Kontur wie das Maschinengehäuse 22 auf dem Hallenboden 26 auf. Weiter kann der Sockel 24 eine Oberfläche zum Anordnen der Maschinen 12, 14, 16 bereitstellen, die über dem Rest des Hallenbodens 26 angeordnet ist.

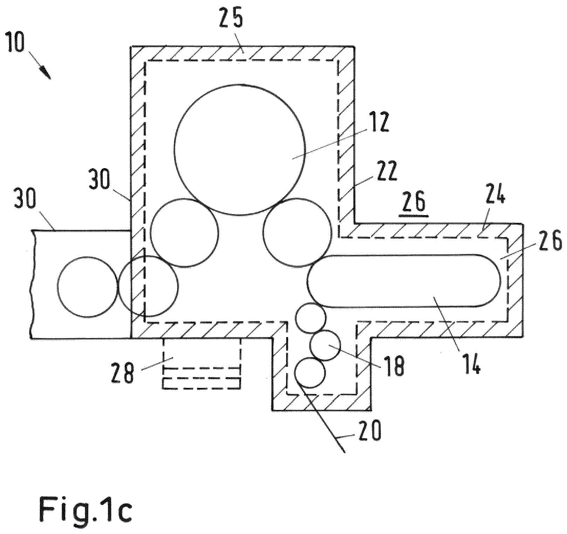

Wie in Figur 1c dargestellt ist, kann der Sockel 24 als Streifen ausgebildet sein, der analog zu einem Streifenfundament lediglich unter den Wandabschnitten 23 des Maschinengehäuses 22 angeordnet ist. Der Streifen kann die gleiche Kontur wie die Kontur des Maschinengehäuses 22 auf dem Hallenboden 26 aufweisen.

Weiter kann, beispielsweise für eine Vereinfachung des Zugangs zu Wartungsöffnungen in das Maschinengehäuse 22, der Sockel 24 mit einem Bereich 28 über die Kontur des Maschinengehäuses 22 auf dem Hallenboden 26 hinausragen. Der Bereich 28 kann beispielsweise Treppenstufen aufweisen, um den Höhenunterschied zwischen dem Hallenboden 26 und der Einstiegshöhe in das Maschinengehäuse 22 zu überbrücken.

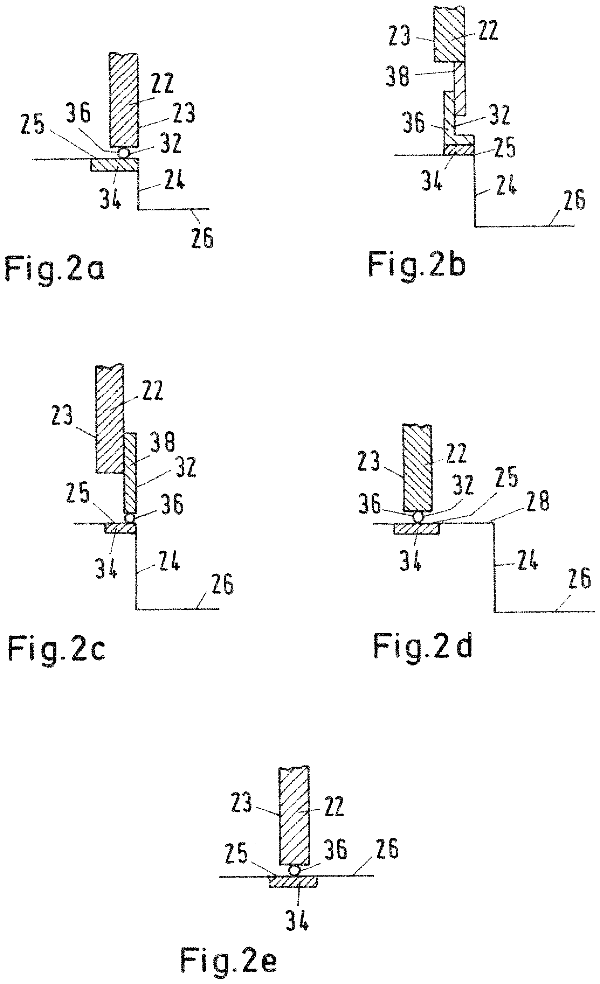

Gemäß Figur 2a bis 2e kann die Dichtvorrichtung 32 in verschiedenen Varianten ausgeführt sein.

Die Dichtvorrichtung 32 gemäß Figur 2a umfasst ein vorzugsweise elastisches Dichtelement 36, das unmittelbar an dem Wandabschnitt 23 befestigt sein kann. Der Hallenbodenbereich 25 ist in diesem Beispiel auf dem Sockel 24 angeordnet und weist eine fugenfreie, ebene, horizontale und Dichtfläche 34 auf. Die Dichtfläche 34 kann beispielsweise durch eine Beschichtung des Hallenbodenbereichs 25 oder durch das Befestigen eines entsprechenden Materials, beispielsweise Kunststoff oder Metall, auf dem Hallenbodenbereich 25 bereitgestellt werden.

In diesem Beispiel ist das Material in den Hallenbodenbereich 25 eingelassen. Die Dichtfläche 34 ist damit bündig zu umliegenden horizontalen Fläche des Sockels 24.

Das Dichtelement 36 kann sich zumindest teilweise entlang der Kontur des Maschinengehäuses 22 auf dem Hallenboden 26 erstrecken. Weiter ist das Dichtelement 36 dazu ausgebildet, eine gasdichte Abdichtung zu bewirken.

Gemäß Figur 2b ist das Material, das die Dichtfläche 34 bereitstellt, auf dem Hallenbodenbereich 25 aufgebracht. Dies kann beispielsweise durch eine Beschichtung des Hallenbodenbereichs 25 erfolgen.

Das Dichtelement 36 ist in diesem Beispiel eine montierbare Dichtung, die aus einem unelastischen Material bestehen kann. Weiter kann der Wandabschnitt 23 des Maschinengehäuses 22 einen Vorsprung 38 aufweisen, der mit dem Dichtelement 36 gasdicht verbunden werden kann. Die Verbindung kann beispielsweise mit Verbindungselementen wie zum Beispiel Schrauben oder Nieten durchgeführt werden. Ebenfalls kann beispielsweise eine Schweißverbindung vorgesehen werden.

Der Vorsprung 38 ragt von einer zu dem Hallenboden 26 weisenden Fläche des Wandelements 23 ab. Diese Fläche kann beispielsweise horizontal orientiert sein.

In dem Beispiel gemäß Figur 2b kann der Vorsprung 38 von einer Seitenfläche des Wandabschnitts 23 des Maschinengehäuses 22 in Richtung des Hallenboden 26 abragen. Der Vorsprung 38 kann beispielsweise an der Seitenfläche des Wandabschnitts 23 befestigt sein.

Das Dichtelement 36 kann an dem Vorsprung 38 befestigt sein und auf der Dichtfläche 34 am Hallenbodenbereich 25 anliegen.

In den oben beschriebenen Beispielen gemäß der Figuren 2a bis 2c ist die Dichtvorrichtung 32 an einem Randbereich des Sockels 24 angeordnet.

Es ist jedoch auch denkbar, dass wie in Figur 2d abgebildet ist, die Dichtvorrichtung 32 von dem Randbereich beanstandet angeordnet ist. Ein Bereich 28 des Sockels 24 kann sich dann in horizontaler Richtung von dem Maschinengehäuse 22 und der Dichtvorrichtung 32 weg erstrecken.

Gemäß Figur 2e ist weiter denkbar, dass auf den Sockel 24 verzichtet wird und die Dichtfläche 34 unmittelbar im Hallenboden 26 angeordnet ist. In diesem Beispiel ist die Dichtfläche 34 bündig mit den umgebenden Flächen des Hallenboden 26. Es ist jedoch auch denkbar, dass die Dichtfläche 34 beispielsweise auf einer Metallplatte angeordnet ist, die auf dem Hallenboden 26 angebracht ist.

Die oben erläuterten Merkmale der verschiedenen Beispiele der Figuren 2a bis 2e können einzeln oder in Kombinationen miteinander verwendet werden. So kann zum Beispiel in den Ausführungsformen nach den Figuren 2a bis 2d auf den Sockel verzichtet werden oder auch im Beispiel nach Figur 2e der Sockel verwendet werden. Gleiches gilt für die weiteren Merkmale in den verschiedenen Ausführungsbeispielen.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: System zum Abdichten eines Maschinengehäuses
- 12: Maschine
- 14: Maschine
- 16: Maschine
- 18: Transportvorrichtung
- 20: Zuführeinrichtung
- 22: Maschinengehäuses
- 23: Wandabschnitt
- 24: Sockel
- 25: Hallenbodenbereich
- 26: Hallenboden
- 28: Bereich des Sockels
- 30: Anlage zum Herstellen und/oder Behandeln von Objekten
- 32: Dichtvorrichtung
- 34: Dichtungsfläche
- 36: Dichtelement
- 38: Vorsprung
- 40: Durchgang

## Patentansprüche

1. Anlage (30) zum Herstellen und/oder Behandeln von insbesondere als Vorformlinge oder Behälter ausgebildeten Objekten, umfassend mindestens eine Maschine (12, 14, 16) zum Herstellen und/oder Behandeln von Objekten, die auf einem Hallenboden (26) angeordnet ist, mindestens ein Maschinengehäuse (22), das zumindest oberhalb und seitlich der Maschine (12, 14, 16) angeordnet ist, und mindestens eine Dichtvorrichtung (32), **dadurch gekennzeichnet, dass** die Dichtvorrichtung (32) zum gasdichten Abdichten des Maschinengehäuses (22) an zumindest einem Wandabschnitt (23) des Maschinengehäuses (22) und mindestens einem Hallenbodenbereich (25) eines Hallenbodens (26) angeordnet ist.

2. Anlage (30) nach Anspruch 1, **dadurch gekennzeichnet, dass** die mindestens eine Dichtvorrichtung (32) mindestens ein, vorzugsweise elastisches, Dichtelement (36) aufweist, das sich zwischen dem Wandabschnitt (23) und dem Hallenbodenbereich (25) erstreckt.

3. Anlage (30) nach Anspruch 1 oder 2, **dadurch gekennzeichnet, dass** die Dichtvorrichtung (32) fest mit dem Wandabschnitt (23) verbunden ist.

4. Anlage (30) nach einem der vorangegangenen Ansprüche, **dadurch gekennzeichnet, dass** die Dichtvorrichtung (32) mindestens eine Dichtungsfläche (34) aufweist, die am Hallenbodenbereich (25) angeordnet ist und vorzugsweise am Hallenbodenbereich (25) befestigt ist.

5. Anlage (30) nach einem der vorangegangenen Ansprüche, **dadurch gekennzeichnet, dass** der Wandabschnitt (23) einen Vorsprung (38) aufweist, der von dem Wandabschnitt (23) abragt und mit der Dichtvorrichtung (32) verbunden ist, wobei der Vorsprung (38) vorzugsweise zum Hallenbodenbereich (25) orientiert ist.

6. System (10) zum Abdichten eines Maschinengehäuses (22), umfassend mindestens einen Hallenbodenbereich (25) eines Hallenbodens (26) einer Maschinenhalle und mindestens eine Anlage (30) nach einem der vorangegangenen Ansprüche, wobei die mindestens eine Dichtvorrichtung (32) an dem mindestens einen Hallenbodenbereich (25) angeordnet ist.

7. System (10) nach Anspruch 6, **dadurch gekennzeichnet, dass** der mindestens eine Hallenbodenbereich (25) mindestens einen Sockel (24) aufweist, an dem die Dichtvorrichtung (32) angeordnet ist.

8. System (10) nach Anspruch 7, **dadurch gekennzeichnet, dass** die Dichtvorrichtung (32) in einem Randbereich des Sockels (24) oder außermittig zum Sockel (24) von dem Randbereich beabstandet angeordnet ist.

9. System (10) nach einem der Ansprüche 6 bis 8, **dadurch gekennzeichnet, dass** der Hallenbodenbereich (25) zumindest an einem Kontaktbereich mit der Dichtvorrichtung (32) fugenfrei, eben und/oder horizontal ausgebildet ist.

10. System (10) nach einem der Ansprüche 6 bis 9, **dadurch gekennzeichnet, dass** das Maschinengehäuse (22) auf dem Hallenboden (26) eine geschlossene Kontur bildet, wobei sich der mindestens eine Hallenbodenbereich (25) zumindest entlang der Kontur erstreckt.
